# EUROPÄISCHE PATENTSCHRIFT

(11) **EP 4 161 791 B1**
(45) Veröffentlichungstag und Bekanntmachung des Hinweises auf die Patenterteilung: **11.03.2026**
(21) Anmeldenummer: 21730118.3
(22) Anmeldetag: 26.05.2021
(51) Int. Cl.: B60K 11/04

(54) **VORBAUSTRUKTUR FÜR EIN NUTZFAHRZEUG, VORZUGSWEISE FÜR EINEN LASTKRAFTWAGEN**
FRONT STRUCTURE FOR A UTILITY VEHICLE, PREFERABLY FOR A LORRY
STRUCTURE AVANT POUR UN VÉHICULE UTILITAIRE, DE PRÉFÉRENCE POUR UN CAMION

(30) Priorität: 03.06.2020 DE 102020114756
(43) Veröffentlichungstag der Anmeldung: 12.04.2023
(73) Patentinhaber: MAN Truck & Bus SE, 80995 München (DE)
(72) Erfinder: KNYRIM, Thomas, 80995 München (DE); STOCKMAIER, Alexander, 80995 München (DE); KOPP, Alexander, 80995 München (DE)
(74) Vertreter: v. Bezold & Partner Patentanwälte - PartG mbB
(86) Internationale Anmeldenummer: PCT/EP2021/064006
(87) Internationale Veröffentlichungsnummer: WO 2021/244911

(56) Entgegenhaltungen:
- EP-A2- 1 106 413
- DE-A1- 102008 019 187
- DE-A1- 19 850 590
- US-A1- 2010 314 426

## Beschreibung

Die Erfindung betrifft eine Vorbaustruktur für ein Nutzfahrzeug, vorzugsweise für einen Lastkraftwagen, sowie ein Nutzfahrzeug mit einer solchen Vorbaustruktur.

Vorbaustrukturen für Nutzfahrzeuge sind u. a. so ausgelegt, dass Crashkräfte unter Einhaltung adäquater Verzögerungswerte zuverlässig aufgenommen werden. Dabei sind Freiräume für Einbauten wie insbesondere einem frontseitigen Kühlermodul für ein Antriebsaggregat zu berücksichtigen. Hierbei ist es notwendig, dass das auf der Vorbaustruktur gelagerte Fahrerhaus bzw. die Fahrerkabine bei einem Frontalcrashfall in der Form deformiert wird, dass der Fahrer und die weiteren Insassen möglichst ohne größere Verletzungen den Unfall überstehen. Da die meisten Lastkraftwagen vom Frontlenkertyp sind und somit keine längere Knautschzone aufweisen, muss bei einem Frontalaufprall das Fahrerhaus aus der Crashzone wegbewegt werden. Hierbei hat es sich als zweckmäßig herausgestellt, dass zur Gewährleistung einer optimalen Sicherheit das Fahrerhaus so weit entgegen der Fahrtrichtung zurückbewegt wird, bis das Crashhindernis an dem Motorblock, der etwas nach hinten versetzt unter dem Fahrerhaus angeordnet ist, zum Stehen kommt.

Um eine Vorbaustruktur zu schaffen, die neben ausreichenden Verformungswegen bei einem Frontalcrash vorteilhafte Anordnungen von Kühlermodulen ermöglicht, schlägt die Offenlegungsschrift EP 2 719 565 A1 eine Vorbaustruktur für ein Nutzfahrzeug vor, die seitliche Rahmenlängsträger, einen Stoßfängerquerträger und einen darunter angeordneten, als Unterfahrschutz dienenden Querträger aufweist. Der Querträger trägt zugleich ein hinter dem Stoßfängerquerträger und zwischen den Rahmenlängsträgern angeordnetes Kühlermodul. Hierbei ist der Unterfahrschutz-Querträger zum Stoßfängerquerträger in Seitenansicht gesehen um einen Längsversatz zur Fahrzeugaußenkontur nach hinten versetzt und trägt insbesondere das Kühlermodul.

Die Offenlegungsschrift EP 2 397 391 A2 schlägt in ähnlicher Weise zur Lösung dieser Aufgabe eine Vorbaustruktur für ein Nutzfahrzeug vor, die einen Rahmenunterbau mit zwei in Fahrzeuglängsrichtung verlaufenden Längsträgern, ein oberhalb der Längsträger elastisch gelagertes Fahrerhaus, ein frontseitig angeordnetes, zwischen den Längsträgern gelagertes Antriebsaggregat und einen in Fahrzeuglängsrichtung gesehen davor positionierten Kühler aufweist sowie einen die Längsträger verbindenden Querträger. Hierbei ist der Querträger in Fahrzeughochachsenrichtung unterhalb und/oder in Fahrzeuglängsrichtung hinter dem unteren Randbereich des Kühlers angeordnet.

In der EP 972 700 A2 ist eine Fahrerhauslagerung eines Nutzfahrzeuges beschrieben, wobei eine Stabilisatorschwinge vorgesehen ist, die an einem hinteren Ende über einen Lagerbock mit einem Fahrzeugrahmen in Verbindung steht und die am vorderen Ende über ein Federdämpferbein mit dem Fahrerhaus in Verbindung steht.

Die DE 10 2008 019 187 A1 zeigt eine Kraftfahrzeug-seitige Haltevorrichtung eines Wärmetauschers eines Kraftfahrzeuges. Die Haltevorrichtung weist eine Aufnahme auf, die dazu eingerichtet ist, dass der Wärmetauscher in Fahrzeuglängsrichtung einwirkenden Kräften durch eine Rotation um eine quer im Kraftfahrzeug ausgerichtete Drehachse ausweichen kann.

In der US 2010/0314426 A1 wird eine Haltestruktur für eine Kühleinheit eines Fahrzeugs gezeigt. Die Kühleinheit umfasst zwei Haltepunkte, die entlang eines Seitenkantenabschnitts der Kühleinheit in einer Längsrichtung voneinander entfernt angeordnet sind. Ein zerbrechlicher Abschnitt ermöglicht es, dass durch eine äußere Kraft der zweite Haltepunkt in Richtung der Rückseite des Fahrzeugs bewegt werden kann.

Die DE 198 50 590 A1 zeigt einen Vorbaubereich für einen Personenkraftwagen mit einer Wärmeübertrageranordnung, die an wenigstens zwei Lagerpunkten mit einer Vorbaustruktur verbunden ist. Dabei sind wenigstens zwei Lagerpunkte derart ausgeführt, dass sie bei einer aufprallbedingten Deformation der Vorbaustruktur eine kraftübertragende und kraftaufnehmende Einbindung der Wärmeübertrageranordnung in die Deformationscharakteristik des Vorbaubereichs erzielen.

Die EP 1 106 413 A2 offenbart eine Kühlerbefestigungsstruktur, die einen Kühlergrill aufweist, der sich vor einem Kühler befindet. Die Kühlerbefestigungsstruktur weist einen Vorsprung auf, der sich in Richtung des Kühlers erstreckt. Wird eine Kühlerabdeckung aufgrund einer Kollision mit einem Hindernis verformt, wird der Kühlergrill nach hinten bewegt, wodurch der Kühler hinter eine Fahrzeugkarosserie gedrängt wird. Der Kühler neigt sich dadurch in diese Richtung, sodass sich die Kühlerabdeckung ausreichend verformen kann, um den Aufprallschock abzumildern.

Derartige Ausgestaltungsformen garantieren jedoch nicht in jedem Fall ein sicheres Zurückweichen des Fahrerhauses in einem Crashfall.

Es ist daher eine Aufgabe der Erfindung, eine Vorbaustruktur für ein Nutzfahrzeug bereitzustellen, die gegenüber dem Stand der Technik ein besseres Crashverhalten aufweist. Es ist insbesondere eine Aufgabe der Erfindung, eine baulich und fertigungstechnisch günstige Vorbaustruktur zu schaffen, die eine ausreichende Rückverlagerung der Fahrerkabine bei einem Frontalcrash und eine vorteilhafte Anordnung von Kühlermodulen ermöglicht.

Die Aufgabe wird gelöst durch eine Vorbaustruktur gemäß dem unabhängigen Anspruch. Vorteilhafte Weiterbildungen sind in den abhängigen Ansprüchen und der Beschreibung unter teilweiser Bezugnahme auf die Figuren angegeben.

Die Vorbaustruktur ist als Vorbaustruktur für ein Nutzfahrzeug, vorzugsweise für einen Lastkraftwagen geeignet. Die Vorbaustruktur umfasst zwei seitliche Rahmenlängsträger eines Fahrgestellrahmens (Leiterrahmens) des Nutzfahrzeugs. Die Vorbaustruktur umfasst ferner ein zwischen den Rahmenlängsträgern angeordnetes Kühlmodul, das über seitliche Schwenklager mit einer gemeinsamen Nickachse mittelbar oder unmittelbar rahmenlängsträgerseitig abgestützt ist. Die Schwenklager können somit an einem rahmenlängsträgerfesten Anbindungspunkt befestigt sein, entweder unmittelbar am Rahmenlängsträger selbst oder über ein fest am Rahmenlängsträger angeordnetes Bauteil.

Die Vorbaustruktur umfasst ferner eine am Kühlmodul befestigte und sich mittelbar oder unmittelbar rahmenlängsträgerseitig abstützende Pendelstütze zum Abfangen von Nickbewegungen des Kühlmoduls.

Hierbei weist die Pendelstütze eine Sollversagungsstelle, z. B. eine Sollbruchstelle, auf, die ausgelegt ist, bei einer crashbedingten Kraftbeaufschlagung während eines Frontalcrashfalls zu versagen, um eine Nickbewegung des Kühlmoduls freizugeben und/oder nicht mehr abzufangen.

Die Merkmale der obigen Vorbaustruktur ermöglichen ein vorteilhaftes Crashverhalten des Kühlmoduls, um die Rückverlagerung der Fahrerkabine im Frontcrashfall zu vergrößern. Das selbsttätige Versagen der Pendelstütze im Frontcrashfall ermöglicht eine Nick- bzw. Schwenkbewegung des Kühlmoduls in Rahmenlängsträgerrichtung und gibt dadurch einen weiteren Drehweg frei als bei intakter Pendelstütze. Dadurch kann ein - in Fahrzeuglängsrichtung gesehen - vor dem Kühlmodul positioniertes Element einer Tragstruktur des Fahrerhauses, z. B. einer Stabilisatorschwinge, durch eine crashbedingte Kraftbeaufschlagung weiter nach hinten verschoben werden und damit die Rückverlagerung der Fahrerkabine im Frontcrashfall erhöht werden.

Unter der Vorbaustruktur wird eine Struktur im vorderen Bereich des Nutzfahrzeugs verstanden, die Teile der Tragstruktur und vorderen Lagerung des Fahrerhauses umfasst. Eine crashbedingte Kraftbeaufschlagung während eines Frontalcrashfalls kann das Überschreiten einer vorbestimmten oder kritischen Kraft oder Energieeinwirkung auf die Vorbaustruktur, insbesondere auf das Kühlmodul, bei einem Aufprall oder einer Frontcrashsituation umfassen.

In einer besonders bevorzugten Ausführungsform weist das Kühlmodul einen vorderen Kühler und einen, vorzugsweise planparallel zum vorderen Kühler angeordneten, hinteren Kühler auf. Die Begriffe "vorderer" und "hinterer" beziehen sich auf die übliche Bedeutung dieser Begriffe bei einer Vorbaustruktur, die im vorderen Bereich des Nutzfahrzeugs angeordnet ist, d. h., der vordere Kühler ist - in Vorwärtsfahrtrichtung des Nutzfahrzeugs gesehen - vor dem hinteren Kühler angeordnet. Der vordere Kühler wird nachfolgend zur besseren Unterscheidung auch als erster Kühler und der hintere Kühler nachfolgend auch als zweiter Kühler bezeichnet. Der der erste und der zweite Kühler sind in dieser bevorzugten Ausführungsform mittels einer gelenkigen Verbindung miteinander verbunden. Hierbei ist eine Bewegung des zweiten Kühlers relativ zum ersten Kühler über die gelenkige Verbindung durch eine mechanische Sicherung unterbunden. Die mechanische Verbindung zeichnet sich dadurch aus, dass diese eine Sollversagungsstelle, z. B. eine Sollbruchstelle, aufweist, die ausgelegt ist, bei einer crashbedingten Kraftbeaufschlagung in einem Frontalcrashfall zu versagen, um eine Bewegung des zweiten Kühlers relativ zum ersten Kühler über die gelenkige Verbindung freizugeben. Mittels dieser zweiten Sollversagungsstelle der Vorbaustruktur wird die Blockbildung des ersten und zweiten Kühlers zum Kühlmodul im Crashfall selbsttätig aufgelöst, so dass die beiden Kühler sich über die gelenkige Verbindung im Crashfall kontrolliert relativ zueinander bewegen können.

Dadurch kann der Drehweg des Kühlmoduls und damit die Rückverlagerung der Fahrerkabine im Frontcrashfall weiter erhöht werden.

In einer Variante dieser Ausführungsform ist die mechanische Sicherung durch ein mit einer Sollbruchstelle versehenes starres Verbindungselement ausgeführt, das zwischen den beiden Kühlern angeordnet und starr mit diesen verbunden ist. Das starre Verbindungselement kann beispielsweise als Steg ausgeführt sein, der eine Sollbruchstelle aufweist. Dies ermöglicht eine kosteneffiziente und platzsparende Realisierung der mechanischen Sicherung. Die mechanische Sicherung kann somit baulich getrennt von der gelenkigen Verbindung vorgesehen sein. Alternativ kann die mechanische Sicherung jedoch auch baulich in die mechanische Sicherung integriert sein.

Die Sollbruchstelle kann durch eine zweckmäßig ausgeführte geometrische Gestaltung des starren Verbindungselements gebildet sein, die bei Überschreiten einer kritischen Kraft, die im Frontcrashfall auf das starre Verbindungselement wirkt, zu einem Bruch des Verbindungselements führt. Die geometrische Gestaltung kann beispielsweise in Form einer Einschnürung realisiert sein. Eine alternative Realisierung einer zweckmäßig ausgeführten geometrischen Gestaltung kann vorsehen, dass der Querschnitt der gesamten Verbindungselements, z. B. der Strebe, geschwächt ist zur Ausbildung der Sollbruchstelle. Alternativ kann die Sollbruchstelle durch eine Rastverbindung ausgeführt sein, die im Crashfall selbststätig ausrastet oder zerstört wird.

Die Vorbaustruktur kann ferner in an sich bekannter Weise eine unterhalb der Rahmenlängsträger angeordnete Unterfahrschutzeinrichtung, auch als Unterfahrschutz bezeichnet, aufweisen. Derartige Unterfahrschutzeinrichtungen sollen verhindern, dass bei einem Straßenverkehrsunfall kleinere Fahrzeuge (PKW, Zweiräder) die Aufbauten, Räder oder das Fahrgestell des Nutzfahrzeugs von vorne unterfahren.

In einer Ausführungsform ist die Unterfahrschutzeinrichtung unterhalb eines unteren Endbereichs des ersten Kühlers und auf Höhe eines unteren Endbereichs des zweiten Kühlers angeordnet. Dies bietet den Vorzug, dass bei Versagen der Pendelstütze im Frontcrashfall aufgrund ihrer Sollversagungsstelle der vordere Kühler über den Unterfahrschutz hinausdrehen kann, um so die Rückverlagerung der Fahrerkabine zu verbessern.

Hierbei ist die Vorbaustruktur bevorzugt derart dimensioniert und/oder ausgelegt, dass bei einer crashbedingten Kraftbeaufschlagung in einem Frontalcrashfall und nach Versagen der Pendelstütze und der mechanischen Sicherung an den jeweiligen Sollversagungsstellen der untere Bereich des ersten Kühlers nach vorne über die Unterfahrschutzeinrichtung verschwenkt und der zweite Kühler über die gelenkige Verbindung nach hinten verlagert wird, z. B. verschwenkt wird. Dies kann beispielsweise dadurch realisiert sein, dass die Sollversagungsstelle der mechanischen Sicherung zwischen dem ersten und zweiten Kühler so ausgelegt ist, dass diese im Frontcrashfall dann versagt, wenn der zweite Kühler mit seinem unteren Endbereich im Frontcrashfall an den Unterfahrschutz schlägt, so dass dann der erste Kühler durch die crashbedingte Kraftbeaufschlagung über den Unterfahrschutz schwenken kann und nicht vom größeren hinteren Kühler blockiert wird.

In einer Ausführungsform ist die Pendelstütze als mindestens eine Koppelstange ausgeführt. Die Koppelstange kann an ihren Enden Befestigungsgelenke aufweisen. Alternativ oder zusätzlich kann die Koppelstange starr ausgebildet sein und sich im Wesentlichen in Rahmenlängsträgerrichtung und/oder in Fahrzeuglängsrichtung erstrecken. Die Sollversagungsstelle der Pendelstütze kann durch eine geometrische Gestaltung beispielhaft in Form einer Einschnürung der Koppelstange ausführt sein, die zum Bruch der Koppelstange bei Einwirkung von typischen, bei einem Frontcrash auftretenden Kräften führt. Unter einer Rahmenlängsträgerrichtung wird die Längsrichtung der Rahmenlängsträger verstanden, die einer Fahrzeuglängsrichtung entspricht.

In einem Ausführungsbeispiel ist die Pendelstütze fahrzeugseitig an mindestens einem der Rahmenlängsträger direkt befestigt oder an einem Bauteil befestigt, das am Rahmenlängsträger befestigt ist. Ein solches Bauteil kann beispielsweise die Frontunterfahrschutzeinrichtung, eine Halterung hierfür oder ein zwischen dem Rahmenlängsträger angeordnete Antriebsaggregat oder Batteriemodul sein.

In einem weiteren Ausführungsbeispiel ist die gelenkige Verbindung zur Verbindung des ersten und zweiten Kühlers an einem oberen Endbereich des ersten und zweiten Kühlers angeordnet und als Schwenkverbindung ausgeführt. Dies ermöglich vorteilhaft, nach Versagen der mechanischen Sicherung im Frontcrashfall, eine Verschwenkung des unteren Bereichs des ersten Kühlers nach vorne und/oder eine Verschwenkung des unteren Bereichs des zweiten Kühlers nach hinten, um einen größeren Drehweg des Kühlmoduls im Frontcrashfall freizugeben.

In einem bevorzugten Ausführungsbeispiel ist der erste Kühler ein Ladeluftkühler oder ein Kühlmittelkühler und der zweite Kühler ein Kühlmittelkühler, beispielsweise ein Wasserkühler. Ferner können der erste Kühler und der zweite Kühler hintereinander angeordnet sein.

Die Vorbaustruktur kann ferner in an sich bekannter Weise eine U-förmige Stabilisatorschwinge aufweisen, die im Bereich ihrer hinteren Enden an Lagerböcken angelenkt ist, die rahmenlängsträgerfest angeordnet sind. Das Kühlmodul ist hierbei hinter einer Stabilisatorstange der Stabilisatorschwinge angeordnet.

Die Stabilisatorschwinge kann an ihren beiden Außenseiten je einen, im Wesentlichen in Rahmenlängsträgerrichtung angeordneten Schenkel aufweisen, wobei die Schenkel im Bereich ihrer vorderen Enden durch eine quer zur Rahmenlängsträgerrichtung verlaufende Stabilisatorstange verbunden sind und im Bereich ihrer hinteren Enden an jeweils einem Lagerbock angelagert sind, der an einem der Rahmenlängsträger angeordnet ist. Die Stabilisatorschwinge kann ein auf der Vorbaustruktur gelagertes Fahrerhaus in Längs- und Querrichtung abstützen, Federbewegungen in Hochrichtung, d. h. in Fahrzeughochachsenrichtung, jedoch zulassen. Die Stabilisatorschwinge wird daher auch als Fahrerhauslagerungsschwinge bezeichnet.

In einer bevorzugten Variante ist die Stabilisatorstange auf Höhe einer oberen Hälfte, weiter vorzugsweise auf Höhe eines oberen Drittels, des Kühlmoduls angeordnet. Anders ausgedrückt verläuft die Stabilisatorstange quer zum Kühlmodul in einer oberen Hälfte des Kühlmoduls, so dass die Stabilisatorstange im Frontcrashfall gegen die oberen Hälfte der vorderen Seite des Kühlmoduls gedrückt wird.

Die Vorbaustruktur kann hierbei so ausgebildet sein, dass bei einer crashbedingten Kraftbeaufschlagung in einem Frontalcrashfall durch Versagen der Pendelstütze an ihrer Sollversagungsstelle und der mechanischen Sicherung an ihrer Sollversagungsstelle ein Rückverlagerungsraum der Stabilisatorschwinge erhöht ist, um eine Rückverlagerung eines auf der Vorbaustruktur gelagerten Fahrerhauses in einem Frontcrashfall zu erhöhen.

Die Erfindung betrifft ferner ein Nutzfahrzeug, umfassend eine Vorbaustruktur, wie in diesem Dokument beschrieben. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht der Vorbaustruktur gemäß einer Ausführungsform der Erfindung;
- Figur 2: eine stark schematisierte Seitenansicht der Vorbaustruktur im undeformierten Ausgangszustand gemäß einer Ausführungsform der Erfindung;
- Figur 3: die Ansicht der Figur 2 in einem ersten Deformationszustand während eines Frontcrashes;
- Figur 4: die Ansicht der Figur 2 in einem zweiten Deformationszustand während eines Frontcrashes; und
- Figur 5: ein Nutzfahrzeug.

Gleiche oder äquivalente Elemente sind in allen Figuren mit denselben Bezugszeichen bezeichnet und zum Teil nicht gesondert beschrieben.

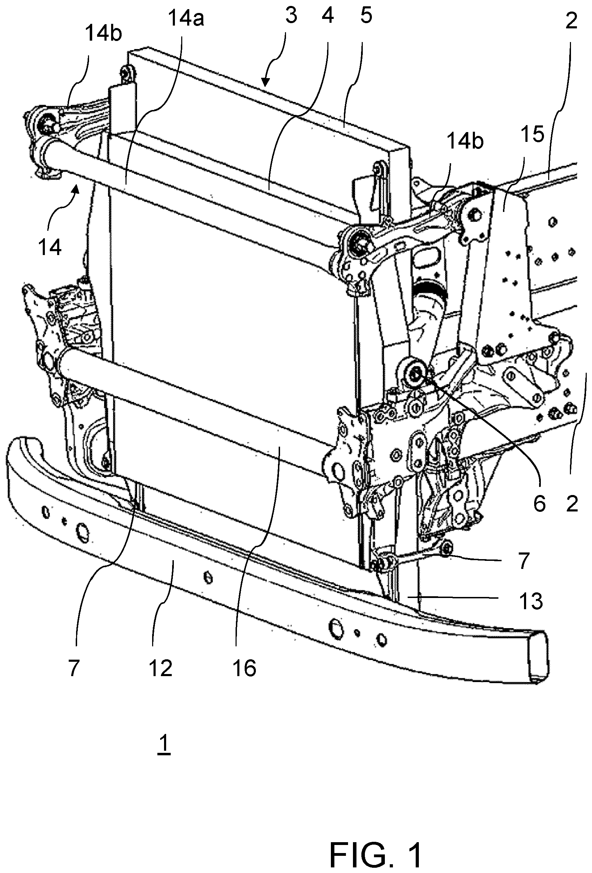

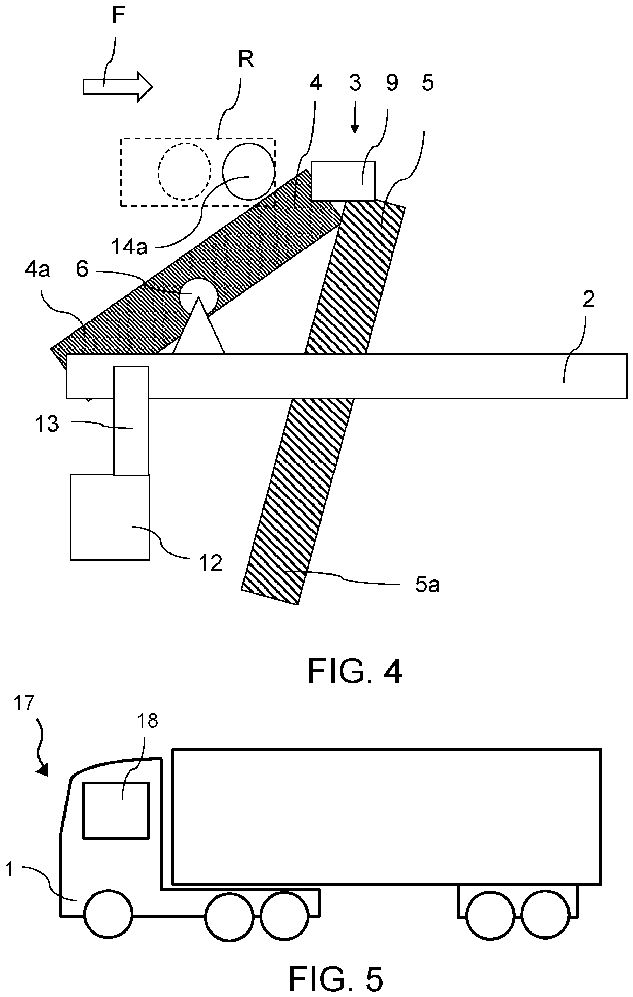

Figur 1 zeigt eine perspektivische Ansicht der Vorbaustruktur 1 eines Nutzfahrzeugs, das in Figur 4 lediglich beispielhaft in Form eines Lastkraftwagens 17 dargestellt ist.

Die in Figur 1 gezeigte Vorbaustruktur 1 umfasst in an sich bekannter Weise zwei seitliche Rahmenlängsträger 2 und ein zwischen den Rahmenlängsträgern angeordnetes Kühlmodul 3.

Das Kühlmodul 3 weist einen vorderen ersten Kühler 4 und einen planparallel zum ersten Kühler angeordneten, hinteren zweiten Kühler 5 auf. Die beiden Kühler 4, 5 sind plattenartig ausgeführt. Hierbei ist der erste Kühler 4 ein Ladeluftkühler und der zweite Kühler 5 ein Kühlmittelkühler, beispielsweise ein Wasserkühler. Der Kühlmittelkühler 6 ist an einen nicht dargestellten Kühlmittelkreislauf einer Brennkraftmaschine des Fahrzeuges angeschlossen, während der Ladeluftkühler 4 der Kühlung der aufgeladenen Verbrennungsluft der Brennkraftmaschine dient. Das Kühlmodul kann weitere Komponenten umfassen, z. B. einen Kondensator eines Kältemittelkreislaufs einer Klimaanlage. Der innere Aufbau und die fluidischen Anschlüsse der beiden Kühler 4 und 5 können in an sich bekannter Weise ausgeführt sein und müssen hier nicht näher beschrieben werden.

In Figur 1 dargestellt ist ferner ein Frontquerträger 16, durch den die Frontbereiche der beiden Rahmenlängsträger 2 miteinander verbunden sind. Die Vorbaustruktur 1 weist ferner eine Unterfahrschutzeinrichtung 12 bzw. ein Unterfahrschutzprofil auf, die bzw. das unterhalb des Frontquerträgers 3 und unterhalb der Rahmenlängsträger 2 angeordnet ist und im Wesentlichen aus einem Rohrmaterial besteht, das links- und rechtsseitig leicht U-förmig entgegen der Fahrtrichtung umgebogen ist. Die Unterfahrschutzeinrichtung 12 kann über Halterungen an einem vorderen Endbereich der Rahmenlängsträger befestigt sein oder an einem Lagerbock oder einer Anschlusskonsole, der oder die am vorderen Endbereich der Rahmenlängsträger 2 befestigt ist.

Die Vorbaustruktur 1 weist ferner eine U-förmige Stabilisatorschwinge 14 auf, die im Bereich ihrer hinteren Enden an Lagerböcken 15 angelenkt ist, die wiederum rahmenlängsträgerfest angeordnet sind und sich oberhalb der Rahmenlängsträger 2 in Fahrzeughochachsenrichtung erstrecken. Die Stabilisatorschwinge 14 weist an ihren beiden Außenseiten je einen, im Wesentlichen in Rahmenlängsträgerrichtung angeordneten Schenkel 14b auf. Die Schenkel 14b sind im Bereich ihres vorderen Endes durch eine quer zur Rahmenlängsträgerrichtung verlaufende Stabilisatorstange 14a verbunden und im Bereich ihrer hinteren Enden an jeweils einem der Lagerböcke 15 angelagert. Die Stabilisatorstange 14a ist vor dem Kühlmodul 3 und auf Höhe einer oberen Hälfte des Kühlmoduls 3 angeordnet.

Diese Vorbaustruktur 1 dient zur vorderen Lagerung (hier nicht vollständig dargestellt) eines Fahrerhauses (nicht dargestellt) eines Lastkraftwagens. Hierbei kann in an sich bekannter Weise und lediglich beispielhaft das Fahrerhaus vorne auf zwei Anschlusskonsolen befestigt sein, mit diesen an zwei Feder-Dämpfer-Beinen angelenkt, über diese gegenüber den Rahmenlängsträger 2 abgefedert und außerdem an der U-förmigen Stabilisatorschwinge 14 quergeführt sowie für Kippen schwenkbar angelenkt sein. Die Anschlusskonsolen können aus zwei Teilen zusammengesetzt sein, nämlich einem oberen Tragteil, auf dem das Fahrerhaus befestigt ist, und einem unteren Lagerteil, an dem an einer Stelle ein Feder-Dämpfer-Bein und an anderer Stelle die Stabilisatorschwinge 14 angelenkt sind.

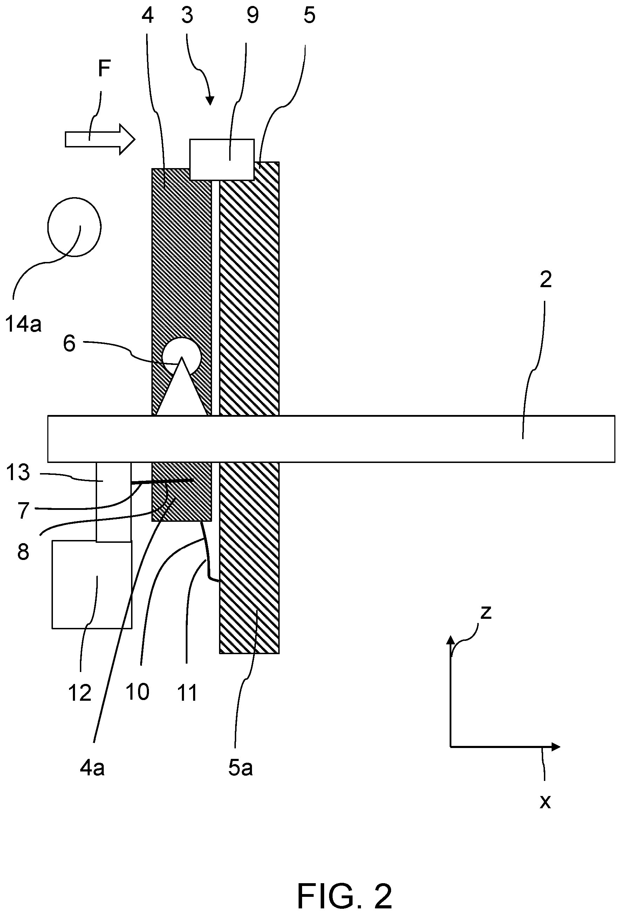

Das gesamte Kühlmodul 3 ist über den vorderen ersten Kühler 4 gegenüber dem Nutzfahrzeug abgestützt. Hierzu ist das Kühlmodul 6 über den vorderen ersten Kühler 4 über seitliche Schwenklager 6 mit einer gemeinsamen Nickachse rahmenlängsträgerseitig abgestützt, was in den Figuren 2 bis 4 besser erkennbar ist. Das Schwenklager 6 weist einen Gelenkpunkt auf, durch welchen eine senkrecht zur Zeichenebene, d. h. in y-Richtung verlaufende Schwenkachse verläuft. Das Kühlmodul 3 ist somit um diese Schwenkachse durch den Gelenkpunkt schwenkbar.

Ferner ist eine in Figur 1 durch die Rahmenlängsträger 2 verdeckte, aber in Figur 2 schematisch gezeigte Pendelstütze 7 vorgesehen. Wie in Figur 2 erkennbar, ist die Pendelstütze 7 einerends am Kühlmodul 3 befestigt und stützt sich anderenends rahmenlängsträgerseitig ab. Die Pendelstütze 7 fängt somit Nickbewegungen des Kühlmoduls 4 auf, die sich im Fahrbetrieb aufgrund von Vibrationen, Erschütterungen etc. ergeben. Die Pendelstütze 7 kann als Zugstrebe oder in ihren Endbereich gelenkig angebundene Koppelstange ausgeführt sein.

Die Pendelstütze erstreckt sich im Wesentlichen in Rahmenlängsträgerrichtung bzw. in Fahrzeuglängsrichtung. Diese Richtung ist in Figur 2 mit x bezeichnet. Die Fahrzeughochachsenrichtung ist mit y gekennzeichnet.

Die Pendelstütze 7 weist eine Sollbruchstelle 8 auf, die so ausgelegt ist, dass die Pendelstütze an der Sollbruchstelle 8 bei einer crashbedingten Kraftbeaufschlagung F in einem Frontalcrashfall bricht, um eine Nickbewegung des Kühlmoduls 3 freizugeben und/oder nicht mehr abzufangen. Die Sollbruchstelle ist somit so auszulegen, dass diese bricht, wenn auf die Pendelstütze bzw. die Sollbruchstelle Kräfte wirken, die typischerweise bei einem Frontaufprallereignis bzw. Frontcrash auftreten. Die Sollbruchstelle 8 kann durch eine geometrische Gestaltung beispielsweise in Form einer Einschnürung der Pendelstütze 7 realisiert sein.

Wie in Figur 2 ferner schematisch dargestellt ist, sind der erste und der zweite Kühler 4, 5 mittels einer gelenkigen Verbindung 9 miteinander verbunden. Vorliegend ist die gelenkige Verbindung 9 an einem oberen Endbereich des ersten und zweiten Kühlers 4, 5 angeordnet und als Schwenkverbindung in Form eines Drehgelenks ausgeführt, dessen Schwenkachse einer senkrecht zur Zeichenebene, d. h. in y-Richtung verlaufenden Schwenkachse entspricht.

Im Ausgangszustand ist die Bewegung des zweiten Kühlers 5 relativ zum ersten Kühler 4 jedoch über eine mechanische Sicherung 10 unterbunden, die in Form eines starren Verbindungselements 10 ausgeführt ist, das zwischen den beiden Kühlern 4, 5 angeordnet und fest mit diesen verbunden ist. Das Verbindungselement 10 kann als starrer Steg oder Strebe ausgeführt sein.

Auch die mechanische Sicherung bzw. das Verbindungselement 10 weist eine Sollbruchstelle 11 auf, die ausgelegt ist, bei einer crashbedingten Kraftbeaufschlagung F in einem Frontalcrashfall zu brechen, um eine Bewegung des zweiten Kühlers 5 relativ zum ersten Kühler 4 über die gelenkige Verbindung 9 freizugeben. Die Sollbruchstelle 11 kann durch eine geometrische Gestaltung beispielsweise in Form einer Einschnürung des Verbindungselements 10 realisiert sein.

Figur 2 zeigt einen Ausgangszustand der Vorbaustruktur 1 vor einem Frontcrash-Ereignis, bei dem sowohl die Pendelstütze 7 als auch die mechanische Sicherung 10 intakt sind, d. h. nicht an ihren Sollbruchstellen 8 bzw. 11 gebrochen sind.

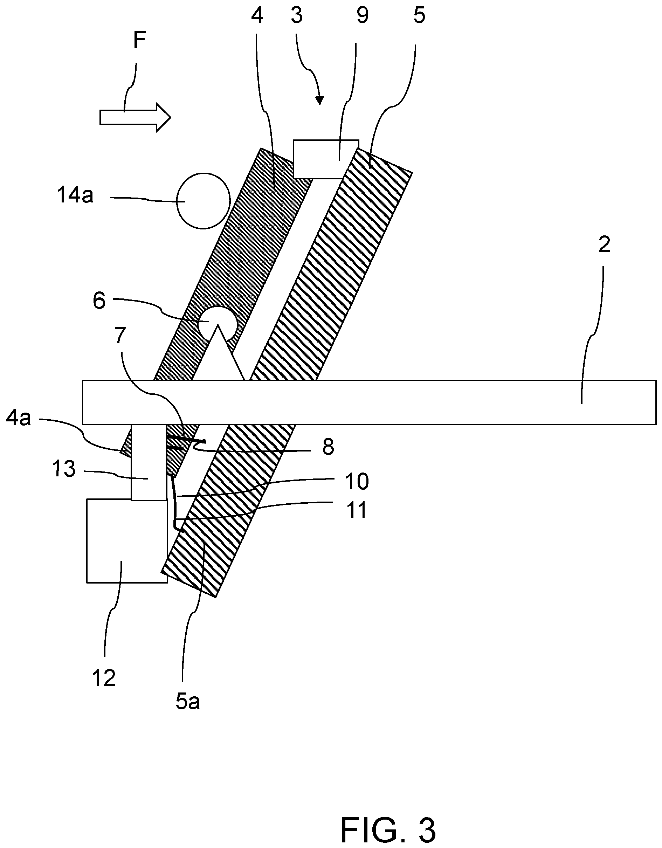

Figur 3 zeigt dagegen die Ansicht der Figur 2 in einem ersten Deformationszustand während eines Frontcrashes, bei dem die Pendelstütze 7 bereits an der Sollbruchstelle 8 gebrochen ist, aufgrund der crashbedingten Kraftbeaufschlagung F in einem Frontalcrashfall. In einem Frontcrashfall wird crashbedingt die Stabilisatorstange 14a der Stabilisatorschwinge 14 gegen den oberen Frontbereich des vorderen Kühlers 4 gedrückt. Die Kraft F führt zum Brechen der Pendelstütze 7 an der Sollbruchstelle 8.

Entsprechend kann das Kühlmodul 3 eine Nickbewegung um die Schwenkachse der Schwenklager 6 ausführen, wobei sich der obere Teil des Kühlmoduls 3 nach hinten und der untere Teil des Kühlmoduls 3 nach vorne verschwenkt. Die beiden Kühler 4 und 5 sind jedoch weiterhin noch starr über die mechanische Sicherung 10 verbunden.

Da sich die Unterfahrschutzeinrichtung 12 unterhalb eines unteren Endbereichs 4a des ersten Kühlers 4, jedoch auf Höhe eines unteren Endbereichs 5a des zweiten Kühlers 5 erstreckt, schlägt der untere Teil 5a des zweiten Kühlers 4 an die Unterfahrschutzeinrichtung 12. Dies führt zum Brechen der mechanischen Sicherung 10 an der Sollbruchstelle 11.

Dies führt zu einer Situation, die Figur 4 dargestellt ist. Nach Brechen der Sollbruchstelle 11 gibt diese einen weiteren Drehweg des Kühlmoduls 3 frei. Die beiden Kühler 4, 5 sind nunmehr nur noch gelenkig an der gelenkigen Verbindung 9 verbunden, so dass der vordere Kühler 4, bedingt durch die crashbedingte Krafteinwirkung F der Stabilisatorstange 14a, weiter verschwenkt, so dass der obere Bereich des ersten Kühlers weiter nach hinten bewegt wird und damit eine größeren Deformationsraum für die Stabilisatorstange 14a freigibt. Der untere Bereich 5a des hinteren Kühlers 5 kann vom unteren Bereich 4a des vorderen Kühlers 4 wegverschwenken.

Dadurch erhöht sich insgesamt der im Crashfall zur Verfügung stehende Rückverlagerungsraum R für die Stabilisatorschwinge 14 und damit der Rückverlagerungsraum für das mit der Stabilisatorschwinge verbundene Fahrerhaus.

Die gezeigte Vorbaustruktur ermöglicht somit, dass bei einer crashbedingten Kraftbeaufschlagung in einem Frontalcrashfall durch Versagen der Pendelstütze 7 an ihrer Sollversagungsstelle 8 und durch Versagen der mechanischen Sicherung 10 an ihrer Sollversagungsstelle 11 ein Rückverlagerungsraum der Stabilisatorschwinge 14 erhöht ist. Dadurch wird eine Rückverlagerung eines auf der Stabilisatorschwinge 14 gelagerten Fahrerhauses 18 in einem Frontcrashfall erhöht. Dadurch kann das Fahrerhaus bei einem Frontalaufprall noch weiter aus der Crashzone wegbewegt werden. Durch die höhere Kabinenrückverlagerung des Fahrerhauses wird die Intrusion der Kabine im Crashfall deutlich verringert, und die Überlebensräume des Insassens im Crashfall werden deutlich erhöht.

Die Erfindung ist durch die beiliegenden Ansprüche definiert.

### Bezugszeichenliste

- 1: Vorbaustrukur
- 2: Rahmenlängsträger
- 3: Kühlmodul
- 4: Erster Kühler
- 4a: Unterer Bereich des ersten Kühlers
- 5: Zweiter Kühler
- 5a: Unterer Bereich des zweiten Kühlers
- 6: Schwenklager
- 7: Pendelstütze, z. B. Sollbruchstelle
- 8: Sollversagungsstelle
- 9: Gelenkige Verbindung
- 10: Mechanische Sicherung
- 11: Sollversagungsstelle, z. B. Sollbruchstelle
- 12: Unterfahrschutzeinrichtung
- 13: Halterung
- 14: Stabilisatorschwinge
- 14a: Stabilisatorstange
- 14b: Schenkel
- 15: Lagerbock
- 16: Vorderer Querträger
- 17: Nutzfahrzeug
- 18: Fahrerhaus
- F: Kraftbeaufschlagung bei Frontcrashfall
- R: Rückverlagerungsraum

## Patentansprüche

1. Vorbaustruktur (1) für ein Nutzfahrzeug, umfassend
a) zwei seitliche Rahmenlängsträger (2);
b) ein zwischen den Rahmenlängsträgern angeordnetes Kühlmodul (3), das über seitliche Schwenklager (6) mit einer gemeinsamen Nickachse rahmenlängsträgerseitig abgestützt ist; und
c) eine am Kühlmodul (3) befestigte und sich mittelbar oder unmittelbar rahmenlängsträgerseitig abstützende Pendelstütze (7) zum Abfangen von Nickbewegungen des Kühlmoduls, wobei die Pendelstütze (7) eine Sollversagungsstelle (8) aufweist, die ausgelegt ist, bei einer crashbedingten Kraftbeaufschlagung (F) in einem Frontalcrashfall zu versagen, um eine Nickbewegung des Kühlmoduls (3) freizugeben und/oder nicht mehr abzufangen, **dadurch gekennzeichnet, dass**
d) das Kühlmodul (3) einen vorderen ersten Kühler (4) und einen, vorzugsweise planparallel zum ersten Kühler angeordneten, hinteren zweiten Kühler (5) aufweist;
e) der erste und der zweite Kühler (4, 5) mittels einer gelenkigen Verbindung (9) miteinander verbunden sind; und
f) eine Bewegung des zweiten Kühlers (5) relativ zum ersten Kühler (3) über die gelenkige Verbindung (9) durch eine mechanische Sicherung (10) unterbunden ist, die eine Sollversagungsstelle (11) aufweist, die ausgelegt ist, bei einer crashbedingten Kraftbeaufschlagung (F) in einem Frontalcrashfall zu versagen, um eine Bewegung des zweiten Kühlers (5) relativ zum ersten Kühler (4) über die gelenkige Verbindung (9) freizugeben.

2. Vorbaustruktur (1) nach Anspruch 1, wobei die mechanische Sicherung (10) durch ein mit einer Sollbruchstelle (11) versehenes starres Verbindungselement, vorzugsweise einen Steg, ausgeführt ist, das zwischen den beiden Kühlern (4, 5) angeordnet und starr mit diesen verbunden ist.

3. Vorbaustruktur (1) nach Anspruch 2, wobei die Sollbruchstelle (11) durch eine geometrische Gestaltung gebildet ist oder durch eine Rastverbindung ausgeführt ist, die im Crashfall selbststätig ausrastet oder zerstört wird.

4. Vorbaustruktur (1) nach einem der vorherigen Ansprüche, ferner aufweisend eine unterhalb der Rahmenlängsträger (2) angeordnete Unterfahrschutzeinrichtung (12).

5. Vorbaustruktur (1) nach Anspruch 4, wobei die Unterfahrschutzeinrichtung (12) unterhalb eines unteren Endbereichs (4a) des ersten Kühlers (4) und auf Höhe eines unteren Endbereichs (5a) des zweiten Kühlers (5) angeordnet ist.

6. Vorbaustruktur (1) nach Anspruch 5, wobei die Vorbaustruktur (1) derart dimensioniert und ausgelegt ist, dass bei einer crashbedingten Kraftbeaufschlagung (F) in einem Frontalcrashfall und nach Versagen der Pendelstütze (7) und der mechanischen Sicherung (10) an den jeweiligen Sollversagungsstellen (8, 11) der untere Bereich (4a) des ersten Kühlers (4) nach vorne über die Unterfahrschutzeinrichtung (12) verschwenkt und der zweite Kühler (5a) über die gelenkige Verbindung (9) nach hinten verschwenkt.

7. Vorbaustruktur (1) nach einem der vorherigen Ansprüche, wobei die Pendelstütze (7) ausgeführt ist als mindestens eine Koppelstange, die
a) an ihren Enden Befestigungsgelenke aufweist; und/oder
b) starr ausgebildet ist und sich im Wesentlichen in Rahmenlängsträgerrichtung und/oder in Fahrzeuglängsrichtung erstreckt.

8. Vorbaustruktur (1) nach einem der vorherigen Ansprüche, wobei die Pendelstütze (7) fahrzeugseitig an mindestens einem der Rahmenlängsträger (2) direkt befestigt ist oder an einem Bauteil befestigt ist, das am Rahmenlängsträger befestigt ist, wie beispielsweise an einer Frontunterfahrschutzeinrichtung oder einer Halterung (13) hierfür, oder einem zwischen dem Rahmenlängsträger (1) angeordneten Antriebsaggregat oder Batteriemodul.

9. Vorbaustruktur (1) nach einem der vorherigen Ansprüche, wobei die gelenkige Verbindung (9) an einem oberen Endbereich des ersten und zweiten Kühlers angeordnet und als Schwenkverbindung ausgeführt ist.

10. Vorbaustruktur (1) nach einem der vorherigen Ansprüche, wobei
a) der erste Kühler (4) ein Ladeluftkühler oder Kühlmittelkühler und der zweite Kühler (5) ein Kühlmittelkühler, beispielsweise ein Wasserkühler, ist; und/oder
b) der erste Kühler (4) und der zweite Kühler (5) hintereinander angeordnet sind.

11. Vorbaustruktur (1) nach einem der vorherigen Ansprüche, ferner aufweisend eine U-förmige Stabilisatorschwinge (14), die im Bereich ihrer hinteren Enden an Lagerböcken angelenkt ist, die rahmenlängsträgerfest angeordnet sind, wobei das Kühlmodul hinter einer Stabilisatorstange (14a) der Stabilisatorschwinge angeordnet ist.

12. Vorbaustruktur nach Anspruch 11, wobei die Stabilisatorschwinge (14) an ihren beiden Außenseiten je einen, im Wesentlichen in Rahmenlängsträgerrichtung angeordneten Schenkel (14b) aufweist, wobei die Schenkel (14b) im Bereich ihres vorderen Endes durch eine quer zur Rahmenlängsträgerrichtung verlaufende Stabilisatorstange (14a) verbunden sind und im Bereich ihrer hinteren Enden an jeweils einem Lagerbock (15) angelagert sind, der an einem der Rahmenlängsträger (2) angeordnet ist, wobei die Stabilisatorstange (14a) vorzugsweise auf Höhe einer oberen Hälfte des Kühlmoduls (3) angeordnet ist.

13. Vorbaustruktur (1) nach Anspruch 11 oder 12, wobei bei einer crashbedingten Kraftbeaufschlagung (F) in einem Frontalcrashfall durch Versagen der Pendelstütze (7) an ihrer Sollversagungsstelle (8) und vorzugsweise der mechanischen Sicherung nach Anspruch 2 an ihrer Sollversagungsstelle ein Rückverlagerungsraum der Stabilisatorschwinge (14) erhöht ist, um eine Rückverlagerung eines auf der Vorbaustruktur (1) gelagerten Fahrerhauses (18) in einem Frontcrashfall zu erhöhen.

14. Nutzfahrzeug (17), vorzugsweise Lastkraftwagen, umfassend eine Vorbaustruktur (1) nach einem der vorherigen Ansprüche.

## Claims

1. Front structure (1) for a utility vehicle, comprising
a) two lateral frame longitudinal beams (2);
b) a cooler module (3) which is arranged between the frame longitudinal beams and which is supported by means of lateral pivot bearings (6) with a common pitch axis at the frame longitudinal beam side; and
c) a hinged support (7) which is secured to the cooler module (3) and which is supported indirectly or directly on the frame longitudinal beam for absorbing pitch movements of the cooler module, wherein the hinged support (7) has a desired failure location (8) which is configured under the crash-related action of forces (F) to fail in the event of a front-end crash in order to release and/or no longer to absorb a pitch movement of the cooler module (3), **characterized in that**
d) the cooler module (3) has a front first cooler (4) and a rear second cooler (5) which is preferably arranged plane-parallel with the first cooler;
e) the first cooler and the second cooler (4, 5) are connected to each other by means of an articulated connection (9); and
f) a movement of the second cooler (5) relative to the first cooler (3) via the articulated connection (9) is prevented by a mechanical securing (10) which has a desired failure location (11) which is configured in the event of crash-related action of forces (F) to fail in the event of a front-end crash in order to release a movement of the second cooler (5) relative to the first cooler (4) via the articulated connection (9).

2. Front structure (1) as claimed in claim 1, wherein the mechanical securing (10) is carried out by a rigid connection element, preferably a web, which is provided with a desired breaking location (11) and which is arranged between the two coolers (4, 5) and rigidly connected thereto.

3. Front structure (1) as claimed in claim 2, wherein the desired breaking location (11) is formed by a geometric shape or configured by means of a locking connection which independently disengages or is destroyed in the event of a crash.

4. Front structure (1) as claimed in one of the preceding claims, further having an underride protection device (12) which is arranged below the frame longitudinal beams (2).

5. Front structure (1) as claimed in claim 4, wherein the underride protection device (12) is arranged below a lower end region (4a) of the first cooler (4) and at the height of a lower end region (5a) of the second cooler (5).

6. Front structure (1) as claimed in claim 5, wherein the front structure (1) is sized and configured in such a manner that, in the event of a crash-related action of forces (F) in the case of a front-end crash and after failure of the hinged support (7) and the mechanical securing (10) at the respective desired failure locations (8, 11), the lower region (4a) of the first cooler (4) pivots forward over the underride protection device (12) and the second cooler (5a) pivots backward via the articulated connection (9).

7. Front structure (1) as claimed in one of the preceding claims, wherein the hinged support (7) is in the form of at least one coupling rod which
a) has securing joints at the ends thereof; and/or
b) is constructed in a rigid manner and extends substantially in the frame longitudinal beam direction and/or in the longitudinal vehicle direction.

8. Front structure (1) as claimed in one of the preceding claims, wherein the hinged support (7) is secured directly at the vehicle side to at least one of the frame longitudinal beams (2) or is secured to a component which is secured to the frame longitudinal beam, such as, for example, a front underride protection device or a bracket (13) for this or a drive unit or battery module which is arranged between the frame longitudinal beams (1).

9. Front structure (1) as claimed in one of the preceding claims, wherein the articulated connection (9) is arranged at an upper end region of the first and second cooler and is in the form of a pivot connection.

10. Front structure (1) as claimed in one of the preceding claims, wherein
a) the first cooler (4) is a charge air cooler or coolant cooler and the second cooler (5) is a coolant cooler, for example, a water cooler; and/or
b) the first cooler (4) and the second cooler (5) are arranged one behind the other.

11. Front structure (1) as claimed in one of the preceding claims, further having a U-shaped stabilizer rocker (14) which is articulated in the region of the rear ends thereof on bearing blocks which are arranged so as to be secured to the frame longitudinal beams, wherein the cooler module is arranged behind a stabilizer rod (14a) of the stabilizer rocker.

12. Front structure as claimed in claim 11, wherein the stabilizer rocker (14) has at each of the two outer sides thereof a member (14b) which is arranged substantially in the frame longitudinal beam direction, wherein the members (14b) are connected in the region of the front ends thereof by means of a stabilizer rod (14a) which extends transversely relative to the frame longitudinal beam direction and are supported in the region of the rear ends thereof in each case on a bearing block (15) which is arranged on one of the frame longitudinal beams (2), wherein the stabilizer rod (14a) is preferably arranged at the height of an upper half of the cooler module (3).

13. Front structure (1) as claimed in claim 11 or 12, wherein, under the crash-related action of forces (F) in the event of a front-end crash, as a result of failure of the hinged support (7) at the desired failure location (8) thereof and preferably the mechanical securing as claimed in claim 2 at the desired failure location thereof, a backward displacement space of the stabilizer rocker (14) is increased in order to increase a backward displacement of a driver's cab (18) which is supported on the front structure (1) in the event of a front-end crash.

14. Utility vehicle (17), preferably a lorry, comprising a front structure (1) as claimed in one of the preceding claims.

## Revendications

1. Structure avant (1) pour un véhicule utilitaire, comprenant
a) deux longerons de châssis latéraux (2) ;
b) un module de refroidissement (3) agencé entre les longerons de châssis, qui est soutenu côté longerons de châssis par des paliers pivotants latéraux (6) avec un axe de tangage commun ; et
c) un soutien pendulaire fixé au module de refroidissement (3) et s'appuyant directement ou indirectement côté longerons de châssis (7) pour absorber les mouvements de tangage du module de refroidissement, le soutien pendulaire (7) présentant un point de rupture prédéterminé (8) qui est conçu pour se rompre lors d'une application de force (F) résultant d'une collision dans un cas de collision frontale afin de permettre et/ou de ne plus absorber un mouvement de tangage du module de refroidissement (3), **caractérisé en ce que**
d) le module de refroidissement (3) présente un premier refroidisseur avant (4) et un deuxième refroidisseur arrière (5), de préférence agencé dans un plan parallèle au premier refroidisseur ;
e) le premier et le deuxième refroidisseurs (4, 5) sont reliés entre eux au moyen d'une liaison articulée (9) ; et
f) un mouvement du deuxième refroidisseur (5) par rapport au premier refroidisseur (3) via la liaison articulée (9) est empêché par une sécurité mécanique (10) qui présente un point de rupture prédéterminé (11) conçu pour se rompre lors d'une application de force (F) résultant d'une collision dans un cas de collision frontale afin de permettre un mouvement du deuxième refroidisseur (5) par rapport au premier refroidisseur (4) via la liaison articulée (9).

2. Structure avant (1) selon la revendication 1, dans laquelle la sécurité mécanique (10) est réalisée par un élément de liaison rigide muni d'un point de rupture prédéterminé (11), de préférence une entretoise, qui est agencé entre les deux refroidisseurs (4, 5) et relié de manière rigide à ceux-ci.

3. Structure avant (1) selon la revendication 2, dans laquelle le point de rupture prédéterminé (11) est formé par une structure géométrique ou est réalisé par une liaison à encliquetage qui se désengage ou se détruit automatiquement en cas de collision.

4. Structure avant (1) selon l'une quelconque des revendications précédentes, présentant en outre un dispositif de protection anti-encastrement (12) agencé sous les longerons de châssis (2).

5. Structure avant (1) selon la revendication 4, dans laquelle le dispositif de protection anti-encastrement (12) est agencé sous une zone d'extrémité inférieure (4a) du premier refroidisseur (4) et à hauteur d'une zone d'extrémité inférieure (5a) du deuxième refroidisseur (5) .

6. Structure avant (1) selon la revendication 5, la structure avant (1) étant dimensionnée et conçue de telle sorte que lors d'une application de force (F) résultant d'une collision dans un cas de collision frontale et après défaillance du soutien pendulaire (7) et de la sécurité mécanique (10) aux points de rupture prédéterminés respectifs (8, 11), la zone inférieure (4a) du premier refroidisseur (4) pivote vers l'avant au-dessus du dispositif de sécurité anti-encastrement (12) et le deuxième refroidisseur (5a) pivote vers l'arrière via la liaison articulée (9).

7. Structure avant (1) selon l'une quelconque des revendications précédentes, dans laquelle le soutien pendulaire (7) est conçu sous la forme d'au moins une barre d'accouplement qui
a) présente des articulations de fixation à ses extrémités ; et/ou
b) est réalisée sous forme rigide et s'étend essentiellement dans la direction des longerons de châssis et/ou dans la direction longitudinale du véhicule.

8. Structure avant (1) selon l'une quelconque des revendications précédentes, dans laquelle le soutien pendulaire (7) est fixé côté véhicule directement à au moins l'un des longerons de châssis (2) ou est fixé à un composant qui est fixé aux longerons de châssis, tel que par exemple un dispositif de protection anti-encastrement avant ou un support (13) pour celui-ci, ou un groupe d'entraînement ou un module de batterie agencé entre les longerons de châssis (1).

9. Structure avant (1) selon l'une quelconque des revendications précédentes, dans laquelle la liaison articulée (9) est agencée au niveau d'une zone d'extrémité supérieure des premier et deuxième refroidisseurs et est conçue sous forme de liaison pivotante.

10. Structure avant (1) selon l'une quelconque des revendications précédentes, dans laquelle :
a) le premier refroidisseur (4) est un refroidisseur d'air de suralimentation ou un refroidisseur de liquide de refroidissement et le deuxième refroidisseur (5) est un refroidisseur de liquide de refroidissement, par exemple un refroidisseur à eau ; et/ou
b) le premier refroidisseur (4) et le deuxième refroidisseur (5) sont agencés l'un après l'autre.

11. Structure avant (1) selon l'une quelconque des revendications précédentes, présentant en outre un bras oscillant stabilisateur en forme de U (14) qui est articulé dans la zone de ses extrémités arrière sur des supports de palier qui sont agencés de manière fixe sur les longerons de châssis, le module de refroidissement étant agencé derrière une barre stabilisatrice (14a) du bras oscillant stabilisateur.

12. Structure avant selon la revendication 11, dans laquelle le bras oscillant stabilisateur (14) présente sur ses deux côtés extérieurs une branche (14b) agencée essentiellement dans la direction des longerons de châssis, les branches (14b) étant reliées dans la zone de leur extrémité avant par une barre stabilisatrice s'étendant transversalement à la direction des longerons de châssis (14a) et étant montées dans la zone de leurs extrémités arrière sur un support de palier (15) respectif, qui est agencé sur l'un des longerons de châssis (2), la barre stabilisatrice (14a) étant agencée de préférence à hauteur d'une moitié supérieure du module de refroidissement (3).

13. Structure avant (1) selon la revendication 11 ou 12, dans laquelle, lors d'une application de force (F) résultant d'une collision dans un cas de collision frontale, en raison d'une défaillance du soutien pendulaire (7) à son point de rupture prédéterminé (8) et de préférence de la sécurité mécanique selon la revendication 2 à son point de rupture prédéterminé, un espace de recul du bras oscillant stabilisateur (14) est augmenté afin d'augmenter le recul d'une cabine de conducteur (18) montée sur la structure avant (1) dans un cas de collision frontale.

14. Véhicule utilitaire (17), de préférence camion, comprenant une structure avant (1) selon l'une quelconque des revendications précédentes.
